# FASCICULE DE BREVET EUROPEEN

(11) **EP 2 356 773 B1**
(45) Date de publication et mention de la délivrance du brevet: **20.11.2019**
(21) Numéro de dépôt: 09801745.2
(22) Date de dépôt: 04.12.2009
(51) Int. Cl.: H04L 9/32, G06K 9/00

(54) **PROCEDE D'IDENTIFICATION OU D'AUTORISATION, ET SYSTEME ET MODULE SECURISE ASSOCIES**
IDENTIFIKATIONS- ODER AUTORISIERUNGSVERFAHREN UND DIESBEZÜGLICHES SYSTEM UND SICHERES MODUL
IDENTIFICATION OR AUTHORISATION METHOD, AND ASSOCIATED SYSTEM AND SECURE MODULE

(30) Priorité: 08.12.2008 FR 0858364
(43) Date de publication de la demande: 17.08.2011
(73) Titulaire: Idemia Identity & Security France, 92400 Courbevoie (FR)
(72) Inventeur: KINDARJI, Bruno, F-75015 Paris (FR); CHABANNE, Hervé, F-75015 Paris (FR); BRINGER, Julien, F-75015 Paris (FR)
(74) Mandataire: Plasseraud IP
(86) Numéro de dépôt international: PCT/FR2009/052420
(87) Numéro de publication internationale: WO 2010/066992

(56) Documents cités:
- WO-A-02/095657
- WO-A-2007/029529
- WO-A-2009/083528
- US-A1- 2008 298 642
- BRINGER J ET AL: "The best of both worlds: Applying secure sketches to cancelable biometrics" SCIENCE OF COMPUTER PROGRAMMING, ELSEVIER SCIENCE PUBLISHERS BV., AMSTERDAM, NL, vol. 74, no. 1-2, 1 décembre 2008 (2008-12-01), pages 43-51, XP025686323 ISSN: 0167-6423 [extrait le 2008-10-11]
- CZAJKA ADAM ET AL: "Iris recognition with match-on-card", 2007 15TH EUROPEAN SIGNAL PROCESSING CONFERENCE, IEEE, 3 September 2007 (2007-09-03), pages 189-192, XP032772929, ISBN: 978-83-921340-4-6 [retrieved on 2015-04-30]
- STEFANO BISTARELLI ET AL: "An asymmetric fingerprint matching algorithm for Java Card TM", PATTERN ANALYSIS AND APPLICATIONS, SPRINGER-VERLAG, LO, vol. 9, no. 4, 3 October 2006 (2006-10-03) , pages 359-376, XP019431615, ISSN: 1433-755X, DOI: 10.1007/S10044-006-0048-4
- F A Afsar ET AL: "Fingerprint Identification and Verification System using Minutiae Matching", National Conference on Emerging Technologies, 1 January 2004 (2004-01-01), page 141, XP055360723, Retrieved from the Internet: URL:http://faculty.pieas.edu.pk/fayyaz/_st atic/pubfiles/papers/fprint_ncet.pdf

## Description

La présente invention concerne l'identification et/ou l'autorisation à partir de données biométriques.

L'identification consiste généralement à retrouver l'identité d'un individu à partir d'une de ses données biométriques.

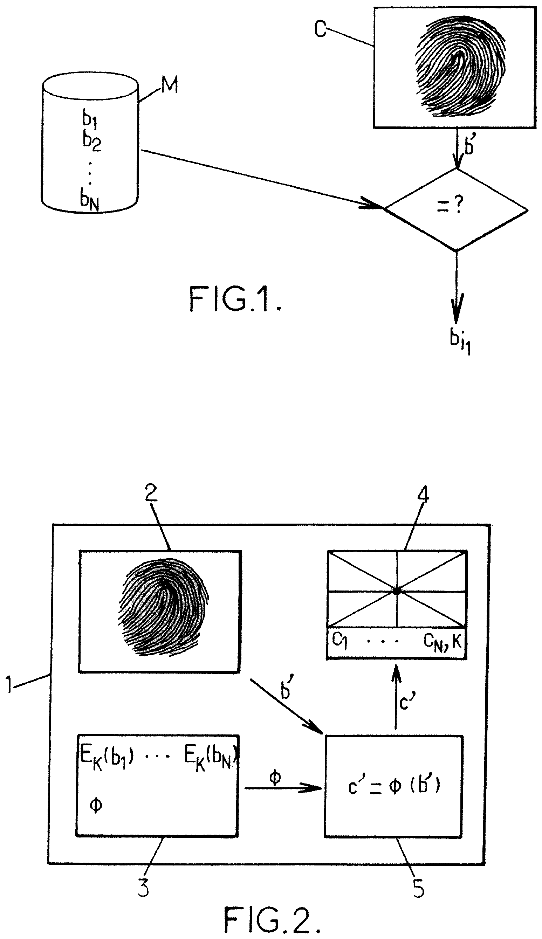

Elle est schématisée sur la figure 1, où elle est effectuée à l'aide d'un système comprenant une base de données biométriques M stockant des données biométriques b₁,...,b_{N} relatives à des individus respectifs et préalablement obtenues lors d'une phase dite d'enrôlement, et un capteur biométrique C apte à acquérir de telles données biométriques.

Les données biométriques peuvent être de tous types et se rapporter à n'importe quelle caractéristique d'un individu, tels qu'un iris, une ou plusieurs empreintes digitales, des minuties, un visage, une paume de la main, un réseau veineux d'un doigt ou d'une main, une combinaison des caractéristiques précédentes, ou autres.

Lorsqu'un individu se présente pour une identification, une donnée biométrique b' relative à cet individu est obtenue à l'aide du capteur C, puis est comparée, à tour de rôle, à chacune des données biométriques b₁,...,b_{N} jusqu'à ce qu'une correspondance avec une de ces données biométriques, bᵢ₁, soit établie.

A partir de cette donnée biométrique bᵢ₁, on retrouve une identité iᵢ₁ de l'individu dont la donnée biométrique b' a été acquise. Cette identité iᵢ₁ est par exemple stockée en relation avec la donnée biométrique bᵢ₁.

Une autorisation se distingue simplement de l'identification qui vient d'être décrite par le fait que la donnée biométrique bᵢ₁ obtenue n'est pas utilisée pour retrouver l'identité de l'individu dont la donnée biométrique b' a été acquise, mais pour donner une autorisation quelconque à cet individu, comme une autorisation d'accès à un site, une autorisation pour la délivrance d'un produit, d'un document, ou autre. Dans un cas d'autorisation, on peut donc se contenter de répondre que b' a été détecté comme provenant d'un des individus de la base d'enrôlement mais sans chercher à lire ni renvoyer d'identité (qui peut donc ne pas être stockée dans ce cas).

Du fait de la nature complexe et instable des données biométriques, la succession des opérations de comparaison susmentionnée induit une importante quantité de calculs. Ainsi, les résultats de l'identification ou de l'autorisation ne sont disponibles qu'après un temps relativement long. De plus, la capacité de calcul requise impose l'utilisation de systèmes relativement lourds.

Certaines tentatives ont été faites pour limiter la quantité de calculs, sans dégrader de façon excessive la fiabilité de l'identification ou de l'autorisation.

L'article « A fast search algorithm for a large fuzzy database » de Feng Hao, John Daugman, Piotr Zielinski, publié en juin 2008 dans « IEEE Transactions on Information Forensics and Security » en est un exemple.

Il prévoit d'appliquer à des codes binaires d'iris, des transformations, telles que des rotations, permutations et extractions, pour ne conserver que des valeurs numériques de taille limitée. Des comparaisons basées sur ces valeurs numériques sont donc largement simplifiées par rapport à celles, évoquées plus haut, réalisées directement sur des données biométriques.

Un autre inconvénient des techniques décrites jusqu'ici réside dans leur faible niveau de protection des données biométriques.

Ceci est particulièrement vrai dans le cas où les données biométriques b₁,...,b_{N} sont directement utilisées.

Même si ces données biométriques sont stockées dans la base de données biométriques M de façon chiffrée, une version déchiffrée de ces données biométriques est cependant manipulée par le système, notamment aux fins de comparaison avec la donnée biométrique acquise b'.

Ainsi, un attaquant ayant accès au système pourrait disposer d'une version non protégée des données biométriques. La préservation de l'identité des individus correspondants n'est donc pas assurée.

Dans le cas où des valeurs numériques allégées sont exploitées en remplacement des données biométriques, conformément à l'enseignement de l'article « A fast search algorithm for a large fuzzy database » susmentionné, ces valeurs numériques donnent néanmoins de l'information sur les données biométriques dont elles sont issues. L'identité des individus correspondants n'est donc pas non plus protégée dans ce cas de figure.

Il est connu de l'état de l'art les documents Le document XP055360723 "Fingerprint Identification and Vérification System using Minutiae Matching". Le document XP032772929 Iris récognition with match-on-card. Le document XP025686323 The best of both worlds: Applying secure sketches to cancelable biometrics Le document XP01943161 An asymmetric fingerprint matching algorithm for Java Card TM Le document WO02095657 concerne des techniques permettant de transformer un modèle biométrique de façon que chaque application utilise un format de modèle unique. Un modèle transformé ne peut être assorti à un second modèle extrait de la même entité biologique à moins que ce second modèle ne soit transformé de sorte que son format soit identique à celui du premier modèle. Le document WO2007029529 concerne un procédé qui consiste : à acquérir des premiers paramètres biométriques à partir d'un utilisateur ; à chiffrer des données entrées; en fonction des paramètres biométriques afin que soit produit un cryptogramme ; à coder; les paramètres biométriques au moyen d'un codeur de syndrome afin que soit produit un code de syndrome ; et à associer le cryptogramme et le code de syndrome l'un à l'autre et à les stocker dans un support lisible par ordinateur de façon que seul un même utilisateur puisse par la suite déchiffrer le cryptogramme.

Un but de la présente invention est d'améliorer la préservation de l'identité d'individus dont des données biométriques ont été acquises.

L'invention propose ainsi un procédé d'identification ou d'autorisation selon la revendication 1.

L'utilisation d'un module sécurisé offre une protection contre l'accès par un attaquant aux données numériques qu'il contient. De ce fait, ces données numériques ne sont pas accessibles à un tel attaquant.

En outre, les données biométriques à partir desquelles lesdites données numériques sont obtenues peuvent elles-mêmes être protégées, par exemple par chiffrement et/ou par stockage au sein du module sécurisé. L'identité des individus auxquels lesdites données biométriques sont relatives est donc préservée.

De plus, le stockage et le traitement de données numériques avantageusement simples plutôt que de données biométriques peut permettre une mise en œuvre par des systèmes légers et avec un temps de calcul limité.

L'algorithme de numérisation susmentionné peut par exemple être un algorithme de quantification agencé pour faire correspondre une donnée biométrique se rapportant à un même individu qu'une des données biométriques dudit ensemble de données biométriques, à une valeur numérique remplissant ledit critère de proximité avec la donnée numérique correspondant à ladite donnée biométrique dudit ensemble de données biométriques.

Avantageusement, l'étape ultérieure suivante peut être mise en œuvre :
/f/ en cas d'absence de correspondance, obtenir une donnée biométrique dudit ensemble de données biométriques correspondant à une donnée numérique de position inférieure dans le classement.

Une telle vérification fiabilise l'identification ou l'autorisation. La complexité de calcul qu'elle entraîne reste en outre réduite par rapport aux comparaisons biométriques systématiques de l'art antérieur.

Dans ce cas, le module sécurisé peut être divisé en au moins deux sous-parties agencées pour communiquer entre elles de manière sécurisée, une desdites sous-parties étant en charge de l'étape /c/ et une autre desdites sous-parties étant en charge de l'étape /e/.

Avantageusement, plusieurs ensembles de données numériques issues d'un ou plusieurs ensembles de données biométriques peuvent être utilisés.

Le module sécurisé peut par exemple stocker au moins un premier et un deuxième ensembles de données numériques obtenus chacun à partir d'au moins un premier et un deuxième ensembles respectifs de données biométriques respectives à l'aide d'un algorithme de numérisation respectif.

Selon un mode de réalisation avantageux pouvant être mis en œuvre dans cette situation : on obtient au moins une donnée biométrique acquise par au moins un capteur respectif, on obtient au moins une première et une deuxième valeurs numériques par application à ladite donnée biométrique acquise de chacun des algorithmes de numérisation, on effectue, au sein du module sécurisé, un classement de certaines au moins des données numériques des premier et un deuxième ensembles de données numériques au moins en fonction de leur proximité avec chacune des première et deuxième valeurs numériques au moins, et on obtient une donnée biométrique de l'un parmi les premier et deuxième ensembles de données biométriques au moins en tenant compte d'une position de la donnée numérique correspondante au sein du classement.

On peut ainsi identifier ou autoriser un individu en acquérant au moins une de ses biométries de façon indifférenciée (visage, empreinte, iris, etc.).

Selon un mode de réalisation avantageux pouvant être mis en œuvre dans cette même situation : on obtient au moins une première et une deuxième données biométriques acquises par des capteurs respectifs, on obtient au moins une première et une deuxième valeurs numériques par application de l'algorithme de numérisation respectif à au moins la première et la deuxième données biométriques acquises respectivement, on effectue, au sein du module sécurisé, un classement d'un sous-ensemble de données numériques du deuxième ensemble de données numériques, en fonction de leur proximité avec la deuxième valeur numérique, on obtient une donnée biométrique du deuxième ensemble de données biométriques en tenant compte d'une position de la deuxième donnée numérique au sein dudit classement, dans lequel ledit sous-ensemble de données numériques du deuxième ensemble de données numériques est sélectionné pour correspondre à un sous-ensemble de données biométriques du deuxième ensemble de données biométriques se rapportant aux mêmes individus qu'un sous-ensemble de données biométriques du premier ensemble de données biométriques déterminé à partir de la première valeur numérique.

L'identification ou l'autorisation peut ainsi être facilitée, car le classement n'est effectué que sur un nombre limité de données. Le temps de convergence peut donc être réduit de ce fait, sans dégrader la fiabilité de l'identification ou de l'autorisation.

L'invention propose aussi un système d'identification ou d'autorisation selon la revendication 13.

Le système considéré peut consister en un système local comprenant un terminal incluant le capteur et auquel le module sécurisé est associé (e.g. par incorporation ou par mise en relation externe). Le module sécurisé peut par exemple prendre la forme d'une puce capable d'être incluse dans le terminal.

En variante, le système peut être distribué. Il peut alors comprendre une base de données centralisée stockant une partie au moins des données biométriques et au moins un terminal décentralisé incluant un capteur. Dans ce cas, chaque module sécurisé utilisé peut être associé à la base de données centralisée, associé à au moins un des terminaux décentralisés ou bien associé pour une partie à la base de données centralisée et pour une autre partie à au moins un des terminaux décentralisés.

L'invention propose également un module sécurisé selon la revendication 14.

D'autres particularités et avantages de la présente invention apparaîtront dans la description ci-après d'exemples de réalisation non limitatifs, en référence aux dessins annexés, dans lesquels :
- la figure 1, déjà commentée, est un schéma illustrant une identification ou autorisation à partir de données biométriques selon l'art antérieur ;
- la figure 2 est un schéma illustrant un premier exemple non limitatif de système d'identification ou d'autorisation selon l'invention ;
- la figure 3 est un schéma illustrant des étapes successives pouvant être mises en œuvre dans le cadre de l'invention ;
- la figure 4 est un schéma illustrant un deuxième exemple non limitatif de système d'identification ou d'autorisation selon l'invention.

La figure 2 montre un premier exemple de système d'identification ou d'autorisation selon l'invention.

Dans cet exemple, le système comprend un terminal 1 incluant un capteur 2 apte à acquérir des données biométriques qui peuvent être de tous types et se rapporter à n'importe quelle caractéristique d'un individu, tel qu'un iris, une ou plusieurs empreintes digitales, des minuties, un visage, une paume de la main, un réseau veineux d'un doigt ou d'une main, une combinaison des caractéristiques précédentes, ou autres.

Le terminal 1 comprend aussi un module sécurisé 4, c'est-à-dire une entité assurant une protection physique des données qu'elle renferme. Dans l'exemple de la figure 2, ce module sécurisé consiste en une puce qui est incluse dans le terminal 1, par exemple lors de sa conception ou par insertion d'une carte à puce, éventuellement amovible, à l'intérieur de ce terminal 1.

Le terminal 1 stocke un ensemble de données biométriques b₁,...,b_{N} relatives à des individus respectifs. Ces données biométriques sont par exemple issues d'un enrôlement préalable des individus correspondants. Elles peuvent éventuellement avoir été obtenues à l'aide du capteur 2 du terminal 1, ou bien par tout autre moyen approprié, comme un capteur indépendant du terminal 1.

Ces données biométriques peuvent être stockées dans une mémoire 3 du terminal 1. Dans ce cas, elles sont de préférence stockées de manière chiffrée, pour éviter qu'un attaquant ayant accès au terminal 1 puisse y avoir accès. Dans l'exemple de la figure 2, ceci est illustré par les références E_{K}(b₁),...,E_{K}(b_{N}), où E désigne un algorithme de chiffrement et K une clé de chiffrement.

Cette solution est avantageuse dans la mesure où elle assure simultanément deux niveaux de protection de données. En effet, en plus de la protection physique des données numériques assurée par le module sécurisé 4 et qui sera détaillée plus bas, le stockage sous forme chiffrée des données biométriques dans une mémoire 3 séparée du module sécurisé 4 assure une autre forme de protection pour ces données biométriques elles-mêmes.

L'algorithme de chiffrement utilisé peut être de tous types, par exemple symétrique ou asymétrique. Les algorithmes AES et DES constituent des exemples non limitatifs d'algorithmes de chiffrements utilisables. Avantageusement, l'algorithme de chiffrement retenu peut être choisi pour que l'algorithme de déchiffrement correspondant soit d'exécution relativement rapide, pour limiter le temps de calcul nécessaire.

La puce 4 mémorise avantageusement l'algorithme de déchiffrement et/ou la clé de déchiffrement appropriés (ce qui est symbolisé par la référence à la clé de chiffrement K à l'intérieur de la puce 4 sur la figure 2), de façon à pouvoir retrouver les données biométriques b₁,...,b_{N} à partir de leur version chiffrée stockée dans la mémoire 3.

En variante, les données biométriques b₁,...,b_{N} peuvent être stockées à l'intérieur de la puce 4, lorsque celle-ci possède une capacité de mémorisation suffisante. Dans ce cas, les données biométriques peuvent être stockées en clair, puisque la puce 4 en assure une protection physique.

Une combinaison entre ces deux modes de stockage, à savoir un stockage de certaines des données biométriques de façon chiffrée dans une mémoire 3 et un stockage en clair de certaines de données biométriques au sein de la puce 4, est également envisageable.

Par ailleurs, les données biométriques b₁,...,b_{N} pourraient n'être pas mémorisées au sein du terminal 1, mais par exemple être accessibles depuis une base de données externe.

Un ensemble de données numériques c₁,...,c_{N} est par ailleurs obtenu à partir des données biométriques respectives b₁,...,b_{N} à l'aide d'un algorithme de numérisation Φ. Autrement dit, on a c₁ = Φ (b₁) , ... , c_{N} = Φ (b_{N}).

L'algorithme de numérisation Φ est un algorithme qui fait correspondre une donnée numérique et une donnée biométrique. Les données numériques c₁,...,c_{N} ainsi obtenues sont éventuellement de taille réduite par rapport aux données biométriques. A titre d'exemple non limitatif, cet algorithme de numérisation fait correspondre à une donnée biométrique bᵢ de l'ordre du kilooctet, une donnée numérique cᵢ d'une centaine d'octets seulement, voire moins. Le rapport des tailles entre données numériques et données biométriques est ainsi de 1 à 10 ou plus (un rapport de 1 à 100 est également envisageable).

En d'autres termes, l'algorithme de numérisation Φ peut être vu comme un algorithme de projection des données biométriques vers des données numériques avantageusement allégées.

Dans un cas avantageux, la numérisation réalisée pour obtenir une donnée numérique dégrade suffisamment la donnée biométrique correspondante pour rendre inefficace l'identification positive contre une grande base de données.

L'algorithme de numérisation Φ peut par ailleurs consister en un algorithme de quantification agencé pour faire correspondre une donnée biométrique b' se rapportant à un même individu qu'une des données biométriques bᵢ parmi b₁,...,b_{N}, à une valeur numérique c' remplissant un critère de proximité avec la donnée numérique cᵢ correspondant à la donnée biométrique bᵢ.

En d'autres termes, si une valeur numérique c' a été obtenue à partir d'une donnée biométrique b' à l'aide d'un tel algorithme de quantification Φ, une proximité entre c' et une donnée numérique cᵢ parmi C₁,...,C_{N} révèle que la donnée biométrique b' et la donnée biométrique bᵢ correspondant à cᵢ se rapportent au même individu, avec un certain taux d'erreur statistique.

Ce taux d'erreur statistique concerne les faux positifs, c'est à dire une proximité entre les valeurs numériques sans que les individus auxquels se rapportent les données biométriques correspondantes soient les mêmes, comme les faux négatifs, c'est à dire une absence de proximité entre les valeurs numériques correspondant à deux données biométriques issues du même individu.

Du fait de cette propriété, l'algorithme de quantification Φ peut permettre de retrouver, avec un certain niveau de confiance, des données biométriques d'individus à partir de valeurs numériques de taille limitée.

Le critère de proximité utilisé peut faire usage d'un calcul de distance numérique, telle qu'une distance de Hamming, une distance euclidienne, ou autre. Dans ce cas, l'algorithme de quantification Φ peut être tel que d(cᵢ,c') < d implique que c' a probablement été obtenu à partir d'une donnée biométrique b' relative au même individu que bᵢ, où cᵢ = Φ(bᵢ), d(cᵢ,c') représente par exemple la distance de Hamming entre cᵢ et c' et d représente un seuil de distance déterminé.

D'autres distances numériques sont bien sûr également envisageables. Certaines sont par exemple représentatives du nombre de valeurs numériques qui diffèrent au sein des chaînes numériques constituant cᵢ et c'. Lorsque ces chaînes numériques sont binaires, une telle distance numérique peut par exemple être obtenue à l'aide d'une opération de OU exclusif entre cᵢ et c'.

D'autres types de critères de proximité sont également possibles comme cela apparaitra à l'homme du métier.

L'algorithme de numérisation peut être n'importe quel algorithme connu. A titre d'exemples non limitatifs, on peut citer les algorithmes décrits dans l'article « Biometric binary string génération with détection rate optimized bit allocation » de C. Chen, R.N.J. Veldhuis, T.A.M. Kevenaar, et A.H.M. Akkermans publié en juin 2008 par l'IEEE, et dans l'article « Face biometrics with renewable templates » de M. van der Veen, T. Kevenaar, G.J. Schrijen, T.H. Akkermans, and F. Zuo publié en février 2006 par le SPIE.

L'algorithme de numérisation est par exemple mémorisé dans la mémoire 3 du terminal 1. En variante, il pourrait être stocké dans la puce 4, ou encore à l'extérieur du terminal 1.

L'ensemble des données numériques C₁,...,C_{N} est stocké dans la puce 4, ce qui assure sa protection. De ce fait, un éventuel attaquant ne peut avoir accès à ces données numériques C₁,...,C_{N} et il ne peut donc en déduire de l'information qui le renseignerait sur les données biométriques b₁,...,b_{N} dont les données numériques c₁,...,c_{N} sont issues.

De plus, étant donné que la taille des données numériques C₁,...,C_{N} est bien plus faible que celles des données biométriques b₁,...,b_{N} correspondantes, elles peuvent tout de même être stockées dans une puce 4 à capacité de mémorisation réduite, ce qui n'est pas toujours le cas pour les données biométriques b₁,...,b_{N} elles-mêmes.

Lorsqu'un individu se présente pour une identification ou une autorisation, une de ses données biométriques b' est acquise à l'aide du capteur 2. Lorsque le capteur 2 est extérieur au terminal 1, contrairement à ce qui a été représenté sur la figure 2, la donnée biométrique b' acquise par ce capteur est transférée par tout moyen approprié dans le terminal 1, aux fins de l'identification ou de l'autorisation.

Une valeur numérique c' est ensuite obtenue par application de l'algorithme de numérisation Φ à la donnée biométrique b' acquise par le capteur 2. Cette valeur numérique c' est par exemple déterminée par une unité de calcul 5 du terminal 1, à laquelle une version de la donnée biométrique b' et une version de l'algorithme de numérisation Φ ont préalablement été transmis.

En variante, le calcul de c' pourrait être réalisé par la puce 4 elle-même. Selon une autre variante encore, le calcul de c' pourrait être réalisé par une unité externe au terminal 1, ce qui suppose son transfert ultérieur au terminal 1.

Dans tous les cas, la valeur numérique c' est rendue disponible à la puce 4 aux fins de l'identification ou de l'autorisation.

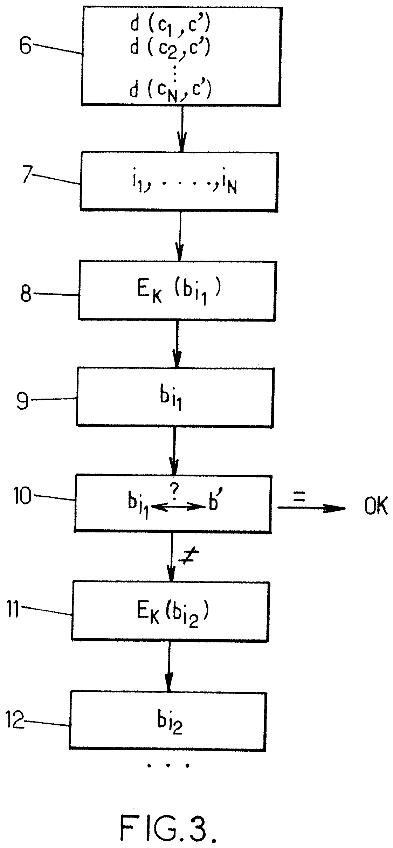

Comme illustré à la figure 3, la puce 4 procède à une analyse de cette valeur numérique c' en relation avec les données numériques C₁,...,C_{N} dont elle dispose, de façon à classer les données numériques C₁,...,C_{N} dans l'ordre de leur proximité avec c' selon le critère de proximité mentionné plus haut.

Cela peut par exemple être réalisé en calculant une distance numérique entre la valeur numérique c' et chacune des données numériques C₁,...,C_{N} (étape 6), puis un classement des C₁,...,C_{N} dans l'ordre croissant des distances ainsi calculées. Ceci peut par exemple conduire à une liste ordonnée des indices i₁,...,i_{N} sélectionnés parmi 1,...N, représentative du classement des données numériques c₁,...c_{N}.

Bien que dans l'exemple de la figure 3, la proximité de c' soit testée, au sein de la puce 4, avec chacune des données numériques c₁,...,c_{N}, en pratique, seule une sous-partie des données numériques C₁,...,C_{N} pourrait faire l'objet de ce classement par la puce 4.

Par exemple, seules les p premières données numériques c₁,...,cₚ, avec p<N, pourraient faire l'objet d'un test de proximité avec c'. En variante, tout ou partie des données numériques c₁,...,c_{N}, pourrait faire l'objet d'un tel test, mais seules les données numériques présentant une proximité suffisante avec c' pourraient faire l'objet du classement.

Le classement est ensuite exploité pour déterminer la donnée biométrique parmi b₁,...b_{N} qui a la plus grande probabilité de se rapporter au même individu que b'.

Dans l'exemple de la figure 3, l'indice i₁ est le premier de la liste 7. Ceci signifie que la donnée numérique correspondant cᵢ₁ est la plus proche de c' au sens du critère de proximité susmentionné.

Lorsque l'algorithme de numérisation Φ utilisé est un algorithme de quantification tel que défini plus haut, ses propriétés font que la donnée biométrique bᵢ₁ telle que cᵢ₁ = Φ(bᵢ₁) a de grandes chances de se rapporter au même individu que b'.

Pour faciliter l'obtention, dans ce cas, de la donnée biométrique bᵢ₁ correspondant à la donnée numérique cᵢ₁, en se basant sur l'indice i₁, il peut être avantageux que l'ordre dans lequel les données numériques c₁,...c_{N} sont stockées dans la puce 4 soit le même que celui dans lequel les données biométriques b₁,...,b_{N} sont stockées par exemple dans la mémoire 3. Des ordres différents sont néanmoins possibles, dans la mesure où l'on peut retrouver la donnée biométrique bᵢ correspondant à toute donnée numérique cᵢ.

Toujours dans l'exemple de la figure 3, la puce 4 peut alors être en mesure d'obtenir cette donnée biométrique bᵢ₁, soit parce qu'elle en dispose dans sa mémoire, soit parce qu'elle est capable d'en recevoir une version chiffrée E_{K}(bᵢ₁) (étape 8) à partir de la mémoire 3 du terminal 1. Après un éventuel déchiffrement à l'aide de l'algorithme et/ou de la clé stockés dans sa mémoire, la puce 4 dispose alors de la donnée biométrique bᵢ₁ à l'étape 9.

Cette donnée biométrique bᵢ₁ peut être utilisée directement pour identifier ou autoriser l'individu qui s'est présenté à cet effet. On notera que la valeur de bᵢ₁ ne sort pas de la puce 4, ce qui en assure la protection.

Avantageusement, une vérification supplémentaire est réalisée pour augmenter la fiabilité de l'identification ou de l'autorisation. Cette vérification supplémentaire peut consister à effectuer une comparaison entre la donnée biométrique bᵢ₁ obtenue à l'étape 9 et la donnée biométrique b' acquise par le capteur (étape 10). Cette comparaison biométrique peut mettre en œuvre tout algorithme conventionnel, selon la nature des données biométriques utilisées. Elle peut se faire au sein de la puce 4.

Si la comparaison révèle une correspondance entre les données biométriques b' et bᵢ₁ avec un niveau de confiance suffisant, on peut considérer que la donnée biométrique bᵢ₁ est bien représentative du même individu que b', si bien que l'identification ou l'autorisation peut se poursuivre sur cette base. On peut alors retourner la valeur OK, comme illustré sur la figure 3, dans le cas d'une autorisation, ou bien une identité iᵢ₁ correspondant à la donnée biométrique bᵢ₁, dans le cas de l'identification.

On notera que le signe "=" utilisé à la figure 3 (comme à la figure 1) ne correspond nécessairement pas à une égalité stricte des données biométriques comparées, mais à un test de proximité biométrique entre ces données, parfois appelé "matching", comme cela est bien connu dans le domaine de la biométrie.

En cas d'absence de correspondance (au sens du "matching"), au contraire, il est envisageable de continuer la procédure en obtenant une autre donnée biométrique correspondant à une donnée numérique de position inférieure dans le classement mentionné plus haut. En variante, on peut s'arrêter là et signifier un échec (NOK).

A titre d'exemple de poursuite de la procédure, la donnée biométrique bᵢ₂ correspondant à la donnée numérique cᵢ₂ présentant la deuxième plus grande proximité avec la valeur numérique c' d'après le classement établi à l'étape 7, peut être obtenue, éventuellement après déchiffrement (étapes 11 et 12).

Ce processus peut avantageusement se poursuivre jusqu'à obtenir une donnée biométrique parmi b₁,...b_{N} correspondant au même individu que b' avec un niveau de confiance suffisant.

A la lumière de ce qui vient d'être décrit, on comprend que la quantité de calculs nécessaire aux fins de l'identification ou de l'autorisation est limitée. En effet, les calculs de distance effectués à l'étape 6 sont de complexité réduite, puisqu'ils s'appliquent à des valeurs numériques de faible taille. La donnée biométrique bᵢ₁ obtenue à l'étape 9 peut donc être déterminée à l'issue d'un temps de calcul relativement court. En outre, une puce 4 ayant des capacités de calcul limitées est tout de même capable de mettre en œuvre ces calculs simples.

Une complexité supérieure est néanmoins requise dans le cas optionnel où une vérification supplémentaire est effectuée entre certaines données biométriques, comme cela a été décrit en référence aux étapes 10 et suivantes. Dans la plupart des cas cependant, le nombre de vérifications d'une telle complexité reste faible du fait des éventuelles propriétés de l'algorithme de numérisation Φ introduit plus haut.

Selon une amélioration de l'exemple décrit en référence aux figures 2 et 3, plusieurs ensembles de données numériques c₁...c_{N} pourraient être obtenus chacun à partir des données biométriques b₁...b_{N} à l'aide d'un algorithme de numérisation Φ respectif.

Dans ce cas, les étapes décrites plus haut peuvent être mises en œuvre en relation avec chacun des ensembles de données numériques c₁...c_{N}. En particulier, des valeurs numériques c' obtenues chacune par application d'un des algorithmes de numérisation à la donnée biométrique b' peuvent être calculées. Puis un classement de certaines au moins des données numériques de chacun de ces ensembles peut être effectué au sein de la puce 4 selon un critère de proximité tel que mentionné plus haut.

On peut alors obtenir une donnée biométrique parmi b₁...b_{N} en tenant compte des différents classements réalisés en relation avec les différents ensembles de données numérique c₁...c_{N}. A titre d'exemple, l'indice parmi 1,...,N ayant la position la plus élevée en considérant les différents classements réalisés peut être retenu en première approximation pour obtenir la donnée biométrique correspondante. Selon un autre exemple, les données biométriques correspondant aux différentes données numériques en tête des classements respectifs pourraient être sélectionnées puis faire l'objet, chacune, d'une vérification supplémentaire pour n'en retenir qu'une.

D'autres possibilités pour obtenir une donnée biométrique parmi b₁...b_{N} en tenant compte d'une position des données numériques au sein de différents classements sont également envisageables comme cela apparaîtra à l'homme du métier.

Il est aussi possible d'effectuer un classement commun tenant compte de différents ensembles de données numériques.

Dans tous les cas, on comprend que l'usage de plusieurs ensembles de données numériques permet de fiabiliser le choix d'une donnée biométrique associée. De plus, du fait de la faible taille des données numériques, une puce 4 ayant des capacités de traitement et mémorisation limitées peut néanmoins être en mesure de stocker les différents ensembles de données numériques et de réaliser les traitements numériques susmentionnés.

Selon une autre amélioration, qui peut éventuellement se combiner avec la précédente, il est possible d'utiliser plusieurs ensembles de données biométriques b₁...b_{N}. Dans ce cas, différents ensembles de données numériques c₁...c_{N} correspondent chacun à un de ces ensembles de données biométriques par l'intermédiaire d'un algorithme de numérisation respectif.

A titre d'exemple, les ensembles de données biométriques pourraient se rapporter à des biométries différentes, par exemple des empreintes digitales de doigts respectifs, une empreinte digitale d'une part et un visage d'autre part, une empreinte digitale d'une part et un réseau veineux d'autre part, une empreinte digitale, un iris et une empreinte palmaire, ou n'importe quelle combinaison envisageable.

Dans ce cas de figure, une ou plusieurs acquisitions b' peuvent être mises en œuvre à l'aide d'un ou plusieurs capteurs adaptés selon la nature des différents ensembles de données biométriques. Des valeurs numériques c' respectives peuvent alors être obtenues à partir des données biométriques respectives b'.

A noter qu'il peut y avoir ici moins de données biométriques capturées qu'à l'enrôlement (par exemple dix doigts à l'enrôlement et un seul à cette étape, le but étant alors de retrouver au moins un des dix doigts).

Il peut aussi y avoir des cas où il n'est pas possible de déterminer la nature précise (par exemple lequel des dix doigts, lequel de l'index droit ou gauche, etc.) de la donnée biométrique capturée, mais seulement un ensemble de natures possibles. On peut alors appliquer tous les algorithmes de numérisation utilisés lors de l'enrôlement et correspondant à cet ensemble de possibilités pour obtenir autant de valeurs numériques. Les classements effectués à partir de ces valeurs numériques permettront par la suite d'obtenir une donnée biométrique et, par là même, de retrouver la nature exacte de b'.

Une mise en œuvre des étapes précédemment décrites permet d'aboutir à l'obtention de plusieurs données biométriques issues de certains au moins des ensembles de données biométriques disponibles.

Plusieurs stratégies sont alors envisageables pour poursuivre l'identification ou l'autorisation. A titre d'exemple, chacune des données biométriques obtenues pourrait être comparée avec la donnée biométrique acquise de même nature, pour ne retenir que celle qui a le plus de chances de correspondre à l'individu à identifier ou à autoriser. En d'autres termes, on cherche au moins une donnée "matchante" (au sens du "matching") sans se soucier des liens entre les données biométriques des différents ensembles de données biométriques, i.e. peu importe que ces données biométriques soient reliées au même individu ou non (pour compenser par exemple l'erreur lors de la pose du doigt ; e.g. index gauche au lieu du droit).

En variante, des vérifications supplémentaires pourraient être mises en œuvre jusqu'à ce que les différentes données biométriques obtenues se rapportent toutes à un même individu. Autrement dit, on peut faire un classement "renforcé" tenant compte des liens entre les données biométriques, i.e. relativement à un individu enrôlé.

En variante encore, on pourrait utiliser au moins deux biométries différentes : la première, dans le but de faire une sélection rapide d'individus (une liste de candidats possibles), et la deuxième qui permettrait d'identifier de manière précise, parmi cette sélection, l'individu correspondant aux biométries capturées. Autrement dit, le premier classement est utilisé pour faire une sélection de candidats (en considérant par exemple les k premières positions du classement) sur laquelle est fait le deuxième classement. Le deuxième classement se base ainsi sur la proximité entre la valeur numérique obtenue par application d'un algorithme de numérisation à la deuxième biométrie et les seules données numériques se rapportant aux individus sélectionnés.

Ceci peut être réalisé, par exemple, en utilisant une première biométrie peu discriminante, éventuellement non numérisée ou en combinaison avec la valeur numérique, avant d'utiliser une deuxième biométrie très discriminante (e.g. le visage pour sélectionner les candidats, puis l'iris pour l'identification ; ou bien le réseau veineux pour sélectionner les candidats, puis l'empreinte pour l'identification).

D'autres possibilités existent également comme cela apparaîtra à l'homme du métier.

D'autres systèmes que celui décrit en référence à la figure 2 sont par ailleurs susceptibles de mettre en œuvre l'invention. Par exemple, un système de plus grande échelle pourrait être utilisé. Dans ce dernier cas, le module sécurisé pourrait comprendre un ou plusieurs boîtiers sécurisés, par exemple de type HSM (Hardware Security Module).

Bien qu'étant de dimensions et de capacité supérieures à une puce, ce type de module offre également une protection physique des données, de sorte qu'un attaquant ne puisse pas avoir accès à son contenu.

Comme dans le cas précédent, la complexité de calcul reste limitée, notamment par rapport à des comparaisons systématiques de données biométriques à l'aide d'algorithmes conventionnels.

L'ensemble des opérations décrites plus haut, notamment en référence aux figures 2 et 3, est applicable à un système de ce type.

Un tel type de système biométrique peut par exemple comprendre un ou plusieurs sous-parties d'un ou plusieurs HSM(s), un ou plusieurs serveur(s) de bases de données centrales ou non, un ou plusieurs capteur(s), un ou plusieurs serveur(s) de numérisation et des liens réseaux pour permettre la communication entre ces différentes entités. Un HSM peut éventuellement se diviser en deux sous-parties, dont l'une au moins serait dédiée au classement des cᵢ et une autre au moins serait dédiée à la vérification (matching), ces sous-parties d'HSM, qui peuvent être physiquement séparées, étant agencées pour communiquer entre elles de manière sécurisée. D'autres architectures sont également envisageables comme cela apparaîtra à l'homme du métier.

On notera d'ailleurs qu'un tel mode de fonctionnement n'est pas exclusif d'un système biométrique complexe. Un terminal tel que décrit en référence à la figure 2 pourrait en effet utiliser un module sécurisé divisé en plusieurs sous-parties, éventuellement séparées physiquement, telles que plusieurs puces distinctes dédiées chacune à certaines tâches et capables de communiquer entre elles de manière sécurisée.

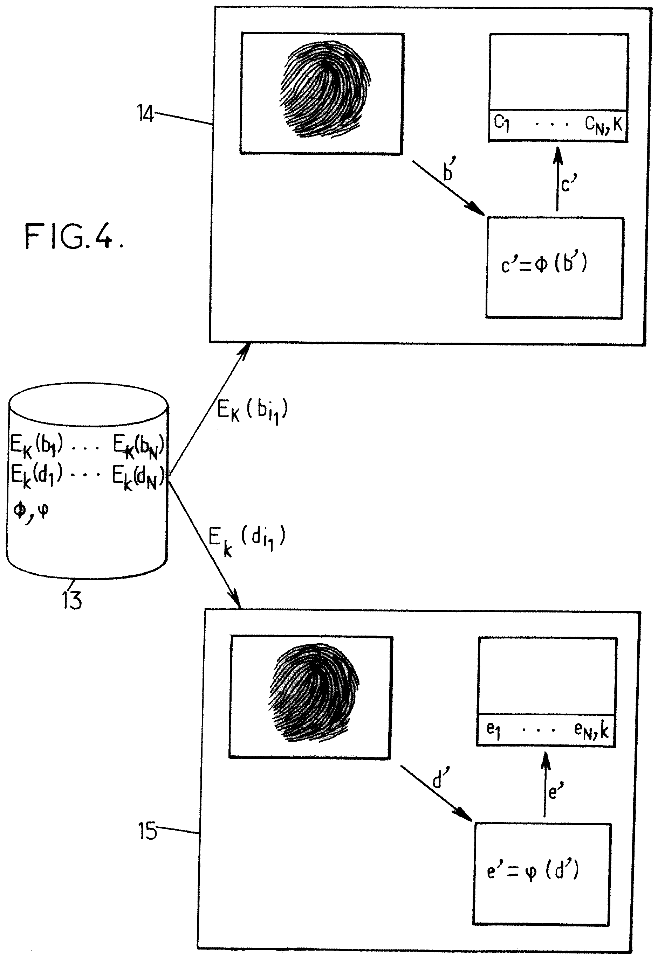

La figure 4 illustre un exemple de système distribué comprenant une base de données centralisée 13 et des terminaux décentralisés 14 et 15. On notera qu'un seul terminal décentralisé, ou bien un nombre de terminaux décentralisés supérieur à 3 pourrait être utilisé en variante.

Dans cet exemple, la base de données 13 contient plusieurs ensembles de données biométriques, de préférence chiffrées. Elle peut également contenir les algorithmes de numérisation permettant la mise en œuvre du procédé décrit plus haut.

Dans l'exemple illustré à la figure 4, la base de données 13 stocke un ensemble de données biométriques (E_{K}(b₁),...,E_{K}(b_{N}) et Eₖ(d₁),...,Eₖ(d_{N})) ainsi qu'un algorithme de numérisation (Φ et ϕ) pour chacun des deux terminaux décentralisés 14 et 15 respectivement.

De façon avantageuse, la base de données 13 peut faire partie d'un poste central où se font les enrôlements, c'est-à-dire les inscriptions de données biométriques préalables à toute vérification.

Chacun des terminaux 14 et 15 peut fonctionner comme le terminal 1 décrit plus haut, après avoir obtenu depuis la base de données 13, de façon sécurisée, par exemple par chiffrement, les données biométriques nécessaires à son fonctionnement aux fins de l'identification ou de l'autorisation.

Avantageusement, le système d'enrôlement gère aussi l'envoi ou le renouvellement des données cᵢ ou eᵢ stockées dans les terminaux.

Ce type d'architecture peut par exemple être utilisé sur un site comprenant un poste central où se font les enrôlements, et une pluralité de salles dont l'accès est contrôlé par un terminal respectif. Dans ce cas, l'identité des individus enrôlés est préservée par le chiffrement de leurs données biométriques au sein de la base de données 13 et par la protection physique assurée par les modules sécurisés de chacun des terminaux 14 et 15.

De plus, les terminaux 14 et 15 peuvent être de complexité réduite, puisqu'ils travaillent sur des données numériques de taille réduite en comparaison des données biométriques.

De façon générale, le système peut être local. Il comprend ainsi un terminal incluant le capteur et auquel le module sécurisé est associé (e.g. par incorporation ou par mise en relation externe). Le module sécurisé peut par exemple prendre la forme d'une puce capable d'être incluse dans le terminal.

En variante, le système peut être distribué. Il peut alors comprendre une base de données centralisée stockant une partie au moins des données biométriques et au moins un terminal décentralisé incluant un capteur. Dans ce cas, chaque module sécurisé utilisé peut être associé à la base de données centralisée, associé à au moins un des terminaux décentralisés ou bien associé pour une partie à la base de données centralisée et pour une autre partie à au moins un des terminaux décentralisés. Une partie des données biométriques pourraient aussi être stockées au niveau d'au moins un des terminaux décentralisés.

On notera enfin que tout ou partie des opérations décrites plus haut peuvent être mises en œuvre à l'aide d'un programme informatique comprenant des instructions de code approprié et coopérant avec au moins un module sécurisé.

## Revendications

1. Procédé d'identification ou d'autorisation utilisant un système comprenant au moins un capteur (2) pour acquérir des données biométriques et un module sécurisé (4) stockant un ensemble de données numériques (c₁, ...,c_{N}) obtenues à partir d'un ensemble de données biométriques (b₁, ..., b_{N}) respectives à l'aide d'un algorithme de numérisation (Φ), les données biométriques (b₁, ..., b_{N}) étant relatives à des individus respectifs,
dans lequel certaines au moins des données biométriques dudit ensemble de données biométriques (b₁, ..., b_{N}) sont stockées de manière chiffrée dans une mémoire externe (3) au module sécurisé (4), et dans lequel le module sécurisé est agencé pour déchiffrer les données biométriques chiffrées,
le procédé comprenant les étapes suivantes
/a/ obtenir une donnée biométrique (b') acquise par le capteur;
/b/ obtenir une valeur numérique (c') par application de l'algorithme de numérisation à la donnée biométrique acquise; **caractérisé en ce que** ledit procédé comprends les étapes suivantes :
/c/ effectuer, au sein du module sécurisé, un test de proximité de la valeur numérique avec au moins certaines des données numériques dudit ensemble de données numériques et établir un classement de certaines au moins des données numériques en fonction de leur proximité avec la valeur numérique obtenue selon un critère de proximité ;
/d/ obtenir une donnée biométrique (bᵢ₁) dudit ensemble de données biométrique en tenant compte d'une position de la donnée numérique correspondante au sein du classement, et
/*e*/ vérifier une correspondance entre la donnée biométrique (bᵢ₁) dudit ensemble de données biométriques (b₁, ..., b_{N}) obtenue et la donnée biométrique (b') acquise par le capteur (2).

2. Procédé selon la revendication 1, comprenant en outre l'étape ultérieure suivante
/f/ en cas d'absence de correspondance, obtenir une donnée biométrique (bᵢ₂) dudit ensemble de données biométriques correspondant à une donnée numérique de position inférieure dans le classement.

3. Procédé selon la revendication 2, dans lequel le module sécurisé (4) est divisé en au moins deux sous-parties agencées pour communiquer entre elles de manière sécurisée, une desdites sous-parties étant en charge de l'étape /*c*/et une autre desdites sous-parties étant en charge de l'étape /*e*/.

4. Procédé selon l'une quelconque des revendications précédentes, dans lequel ledit algorithme de numérisation est un algorithme de quantification agencé pour faire correspondre une donnée biométrique se rapportant à un même individu qu'une des données biométriques dudit ensemble de données biométriques, à une valeur numérique remplissant ledit critère de proximité avec la donnée numérique correspondant à ladite donnée biométrique dudit ensemble de données biométriques.

5. Procédé selon l'une quelconque des revendications précédentes, dans lequel certaines au moins des données biométriques dudit ensemble de données biométriques (b₁, ..., b_{N}) sont stockées en clair dans le module sécurisé (4).

6. Procédé selon l'une quelconque des revendications précédentes, dans lequel les données numériques dudit ensemble de données numériques (c₁, ...,c_{N}) ont une taille inférieure à une taille des données biométriques respectives dudit ensemble de données biométriques (b₁, ..., b_{N}).

7. Procédé selon l'une quelconque des revendications précédentes, dans lequel le module sécurisé (4) stocke au moins deux ensembles de données numériques obtenus chacun à partir d'un ensemble de données biométriques respectives à l'aide d'un algorithme de numérisation respectif, dans lequel on obtient au moins deux valeurs numériques par application de l'algorithme de numérisation respectif à la donnée biométrique (b') acquise, on classe, au sein du module sécurisé, certaines au moins des données numériques de chacun desdits ensembles de données numériques en fonction de leur proximité avec la valeur numérique correspondante selon un critère de proximité, et dans lequel on obtient une donnée biométrique dudit ensemble de données biométriques en tenant compte d'une position des données numériques correspondantes au sein des classements.

8. Procédé selon l'une quelconque des revendications précédentes, dans lequel le module sécurisé (4) stocke au moins un premier et un deuxième ensembles de données numériques obtenus chacun à partir d'au moins un premier et un deuxième ensembles respectifs de données biométriques respectives à l'aide d'un algorithme de numérisation respectif.

9. Procédé selon la revendication 8, dans lequel on obtient au moins une donnée biométrique acquise par au moins un capteur respectif, on obtient au moins une première et une deuxième valeurs numériques par application à ladite donnée biométrique acquise de chacun des algorithmes de numérisation, on effectue, au sein du module sécurisé, un classement de certaines au moins des données numériques des premier et un deuxième ensembles de données numériques au moins en fonction de leur proximité avec chacune des première et deuxième valeurs numériques au moins, et on obtient une donnée biométrique de l'un parmi les premier et deuxième ensembles de données biométriques au moins en tenant compte d'une position de la donnée numérique correspondante au sein du classement.

10. Procédé selon la revendication 8, dans lequel on obtient au moins une première et une deuxième données biométriques acquises par des capteurs respectifs, on obtient au moins une première et une deuxième valeurs numériques par application de l'algorithme de numérisation respectif à au moins la première et la deuxième données biométriques acquises respectivement, on effectue, au sein du module sécurisé, un classement d'un sous-ensemble de données numériques du deuxième ensemble de données numériques, en fonction de leur proximité avec la deuxième valeur numérique, on obtient une donnée biométrique du deuxième ensemble de données biométriques en tenant compte d'une position de la deuxième donnée numérique au sein dudit classement, dans lequel ledit sous-ensemble de données numériques du deuxième ensemble de données numériques est sélectionné pour correspondre à un sous-ensemble de données biométriques du deuxième ensemble de données biométriques se rapportant aux mêmes individus qu'un sous-ensemble de données biométriques du premier ensemble de données biométriques déterminé à partir de la première valeur numérique.

11. Procédé selon l'une quelconque des revendications précédentes, dans lequel le système est un système local comprenant un terminal (1) incluant le capteur et auquel le module sécurisé (4) est associé.

12. Procédé selon l'une quelconque des revendications 1 à 10, dans lequel le système est un système distribué comprenant une base de données centralisée (13) stockant une partie au moins des données biométriques (EK(b₁), ... ,EK(b_{N}); Ek(d₁), ... ,Ek(d_{N})) et au moins un terminal décentralisé.

13. Système d'identification ou d'autorisation pour la mise en œuvre du procédé selon l'une quelconque des revendications précédentes, le système comprenant au moins un capteur (2) pour acquérir des données biométriques et un module sécurisé (4) stockant un ensemble de données numériques (c₁, ...,c_{N}) obtenues à partir d'un ensemble de données biométriques (b₁, ..., b_{N}) respectives à l'aide d'un algorithme de numérisation (Φ), les données biométriques (b₁, ..., b_{N}) étant relatives à des individus respectifs,
le module sécurisé étant agencé pour déchiffrer au moins certaines données biométriques chiffrées stockées dans une mémoire externe (3) au module sécurisé (4), le système comprenant :
/a/ des moyens pour obtenir une donnée biométrique (b') acquise par le capteur;
/b/ une unité de calcul pour déterminer une valeur numérique (c') par application de l'algorithme de numérisation à la donnée biométrique **caractérisé en ce que** ledit système comprend
/c/ une unité de classement pour effectuer, au sein du module sécurisé, un test de proximité de la valeur numérique avec au moins certaines des données numériques dudit ensemble de données numériques et établir un classement de certaines au moins des données numériques en fonction de leur proximité avec la valeur numérique obtenue selon un critère de proximité ; et
/d/ une unité d'identification ou d'autorisation pour obtenir une donnée biométrique (bᵢ₁) dudit ensemble de données biométriques en tenant compte d'une position de la donnée numérique correspondante au sein du classement.
/*e*/ des moyens pour vérifier une correspondance entre la donnée biométrique (bᵢ₁) dudit ensemble de données biométriques (b₁, ..., b_{N}) obtenue et la donnée biométrique (b') acquise par le capteur (2).

14. Module sécurisé (4) pour une utilisation dans un système d'identification ou d'autorisation pour la mise en œuvre du procédé selon l'une quelconque des revendications 1 à 12 et comprenant au moins un capteur (2) pour acquérir des données biométriques, le module sécurisé comprenant une mémoire pour stocker un ensemble de données numériques (c₁, ...,c_{N}) obtenues à partir d'un ensemble de données biométriques (b₁, ..., b_{N}) respectives à l'aide d'un algorithme de numérisation (Φ), les données biométriques (b₁, ..., b_{N}) étant relatives à des individus respectifs,
**caractérisé en ce que**
le module sécurisé est en outre agencé pour déchiffrer au moins certaines données biométriques chiffrées stockées dans une mémoire externe (3) au module sécurisé (4), et comprend :
- des moyens pour obtenir une valeur numérique (c') par application de l'algorithme de numérisation à une donnée biométrique acquise (b') par le capteur;
- une unité de classement pour effectuer un test de proximité de la valeur numérique avec au moins certaines des données numériques dudit ensemble de données numériques et établir un classement de certaines au moins des données numériques en fonction de leur proximité avec la valeur numérique obtenue selon un critère de proximité ; et
- une unité d'identification ou d'autorisation pour obtenir une donnée biométrique (bu) dudit ensemble de données biométriques en tenant compte d'une position de la donnée numérique correspondante au sein du classement, et
- des moyens pour vérifier une correspondance entre la donnée biométrique (bᵢ₁) dudit ensemble de données biométriques (b₁, ..., b_{N}) obtenue et la donnée biométrique (b') acquise par le capteur (2)..

## Patentansprüche

1. Identifikations- oder Autorisierungsverfahren, das ein System verwendet, das mindestens einen Sensor (2) zum Erfassen der biometrischen Daten und ein sicheres Modul (4) umfasst, das einen Satz numerischer Daten (c₁, ..., c_{N}), die ausgehend von einem Satz jeweiliger biometrischer Daten (b₁, ..., b_{N}) mit Hilfe eines Digitalisierungsalgorithmus (φ) erhalten werden, speichert, wobei die biometrischen Daten (b₁, ..., b_{N}) jeweilige Individuen betreffen,
wobei zumindest einige der biometrische Daten des biometrischen Datensatzes (b₁, ..., b_{N}) auf verschlüsselte Art in einem Speicher (3) außerhalb des sicheren Moduls (4) gespeichert werden, und wobei das sichere Modul eingerichtet ist, um die verschlüsselten biometrischen Daten zu entschlüsseln, wobei das Verfahren die folgenden Schritte umfasst:
/a/ Erhalten eines biometrischen Datums (b'), das von dem Sensor erfasst wird;
/b/ Erhalten eines numerischen Werts (c'), durch Anwenden des Digitalisierungsalgorithmus auf das erfasste biometrische Datum; **dadurch gekennzeichnet, dass** das Verfahren die folgenden Schritte umfasst:
/c/ Ausführen innerhalb des sicheren Moduls eines Proximitätstests mit zumindest einigen der numerischen Daten des numerischen Datensatzes, und Erstellen einer Klassifizierung mindestens bestimmter der numerischen Daten in Abhängigkeit von ihrer Proximität mit dem Zahlenwert, der gemäß dem Proximitätskriterium erhalten wird;
/d/ Erhalten eines biometrischen Datums (bᵢ₁) des biometrischen Datensatzes unter Berücksichtigung einer Position des entsprechenden numerischen Datums innerhalb der Klassifizierung, und
/e/ Prüfen einer Entsprechung zwischen dem biometrischen Datum (bᵢ₁) des erhaltenen biometrischen Datensatzes (b₁, ..., b_{N}) und dem biometrischen Datum (b'), das von dem Sensor (2) erfasst wird.

2. Verfahren nach Anspruch 1, das außerdem den folgenden späteren Schritt umfasst:
/f/ bei Abwesenheit von Entsprechung, Erhalten eines biometrischen Datums (bᵢ₂) des biometrischen Datensatzes, das einem numerischen Datum mit niedrigerer Position in der Klassifizierung entspricht.

3. Verfahren nach Anspruch 2, wobei das sichere Modul (4) in mindestens zwei Untereinheiten geteilt ist, die eingerichtet sind, um miteinander abgesichert zu kommunizieren, wobei einem der Untereinheiten der Schritt /c/ obliegt und einem anderen der Untereinheiten der Schritt /e/ obliegt.

4. Verfahren nach einem der vorhergehenden Ansprüche, wobei der Digitalisierungsalgorithmus ein Quantifizierungsalgorithmus ist, der eingerichtet ist, um ein biometrisches Datum, das mit einem selben Individuum zusammenhängt wie ein biometrisches Datum des biometrischen Datensatzes, mit einem numerischen Wert, der das Proximitätskriterium mit dem numerischen Datum, das dem biometrischen Datum des biometrischen Datensatzes entspricht, erfüllt, übereinstimmen zu lassen.

5. Verfahren nach einem der vorhergehenden Ansprüche, wobei zumindest einige der biometrischen Daten des biometrischen Datensatzes (b₁, ..., b_{N}) in Klarschrift in dem sicheren Modul (4) gespeichert sind.

6. Verfahren nach einem der vorhergehenden Ansprüche, wobei die numerischen Daten des numerischen Datensatzes (c₁, ..., c_{N}) eine Größe aufweisen, die kleiner ist als eine Größe der jeweiligen biometrischen Daten des biometrischen Datensatzes (b₁, ..., b_{N}) .

7. Verfahren nach einem der vorhergehenden Ansprüche, wobei das sichere Modul (4) mindestens zwei numerische Datensätze speichert, die jeweils ausgehend von einem jeweiligen biometrischen Datensatz mit Hilfe eines jeweiligen Digitalisierungsalgorithmus erhalten werden, wobei mindestens zwei numerische Werte durch Anwenden des jeweiligen Digitalisierungsalgorithmus auf das erfasste biometrische Datum (b') erhalten werden, innerhalb des sicheren Moduls zumindest einige der numerischen Daten von jedem der numerischen Datensätze in Abhängigkeit von ihrer Proximität mit dem entsprechenden numerischen Wert gemäß einem Proximitätskriterium klassifiziert werden, und wobei ein biometrisches Datum des biometrischen Datensatzes unter Berücksichtigung einer Position der entsprechenden numerischen Daten innerhalb der Klassifizierungen erhalten wird.

8. Verfahren nach einem der vorhergehenden Ansprüche, wobei das sichere Modul (4) mindestens einen ersten und einen zweiten numerischen Datensatz speichert, die jeweils ausgehend von mindestens einem ersten und einem zweiten biometrischen Datensatz mit Hilfe eines jeweiligen Digitalisierungsalgorithmus erhalten werden.

9. Verfahren nach Anspruch 8, wobei mindestens ein biometrisches Datum, das durch mindestens einen jeweiligen Sensor erfasst wird, erhalten wird, mindestens ein erster und ein zweiter numerischer Wert durch Anwenden auf das erfasste biometrische Datum jedes der Digitalisierungsalgorithmen erhalten wird, innerhalb des sicheren Moduls eine Klassifizierung mindestens bestimmter der numerischen Daten des ersten und zweiten numerischen Datensatzes mindestens in Abhängigkeit von ihrer Proximität mit zumindest einigen des ersten und zweiten numerischen Werts ausgeführt wird, und ein biometrisches Datum des ersten und zweiten biometrischen Datensatzes mindestens unter Berücksichtigung einer Position des entsprechenden numerischen Datums innerhalb der Klassifizierung erhalten wird.

10. Verfahren nach Anspruch 8, wobei mindestens ein erstes und ein zweites biometrisches Datum, die von jeweiligen Sensoren erfasst werden, erhalten werden, mindestens ein erster und ein zweiter numerischer Wert durch Anwenden des jeweiligen Digitalisierungsalgorithmus auf mindestens das erste und zweite biometrische Datum, die jeweils erfasst werden, erhalten werden, innerhalb des sicheren Moduls eine Klassifizierung einer Untereinheit numerischer Daten des zweiten numerischen Datensatzes in Abhängigkeit von ihrer Proximität mit dem zweiten numerischen Wert ausgeführt wird, ein biometrisches Datum des zweiten biometrischen Datensatzes unter Berücksichtigung einer Position des zweiten biometrischen Datums innerhalb der Klassifizierung erhalten wird, wobei die Untereinheit numerischer Daten des zweiten numerischen Datensatzes ausgewählt wird, um einer Untereinheit biometrischer Daten des zweiten biometrischen Datensatzes zu entsprechen, die dieselben Individuen betreffen wie eine Untereinheit biometrischer Daten des ersten biometrischen Datensatzes, die ausgehend von dem ersten numerischen Wert bestimmt wird.

11. Verfahren nach einem der vorhergehenden Ansprüche, wobei das System ein lokales System ist, das ein Endgerät (1) umfasst, das den Sensor enthält, und mit dem das sichere Modul (4) assoziiert ist.

12. Verfahren nach einem der Ansprüche 1 bis 10, wobei das System ein verteiltes System ist, das eine zentrale Datenbank (13) umfasst, die mindestens einen Teil der biometrischen Daten (EK(b₁), ..., EK(b_{N}); EK(d₁), ..., EK(d_{N})) speichert, und mindestens ein dezentrales Endgerät.

13. Identifikations- und Autorisierungssystem für das Umsetzen des Verfahrens nach einem der vorhergehenden Ansprüche, wobei das System mindestens einen Sensor (2) zum Erfassen der biometrischen Daten und ein sicheres Modul (4), umfasst, das einen numerischen Datensatz (c₁, ..., c_{N}) speichert, die ausgehend von einem jeweiligen biometrischen Datensatz (b₁, ..., b_{N}) mit Hilfe eines Digitalisierungsalgorithmus (φ) erhalten werden, wobei die biometrischen Daten (b₁, ..., b_{N}) jeweilige Individuen betreffen,
wobei das sichere Modul eingerichtet ist, um mindestens bestimmte verschlüsselte biometrische Daten, die in einem Speicher (3) außerhalb des sicheren Moduls (4) gespeichert sind, zu entschlüsseln, wobei das System Folgendes umfasst:
/a/ Mittel zum Erhalten eines biometrischen Datums (b'), das von dem Sensor erfasst wird;
/b/ eine Recheneinheit, um einen numerischen Wert (c') durch Anwenden des Digitalisierungsalgorithmus auf das biometrische Datum zu bestimmen, **dadurch gekennzeichnet, dass** das System Folgendes umfasst:
/c/ eine Klassifizierungseinheit zum Ausführen innerhalb des sicheren Moduls eines Proximitätstests des numerischen Werts mit mindestens bestimmten der numerischen Daten des numerischen Datensatzes, und Erstellen einer Klassifizierung mindestens bestimmter der numerischen Daten in Abhängigkeit von ihrer Proximität mit dem Zahlenwert, der gemäß dem Proximitätskriterium erhalten wird; und
/d/ eine Identifikations- oder Autorisierungseinheit zum Erhalten eines biometrischen Datums (bᵢ₁) des biometrischen Datensatzes unter Berücksichtigung einer Position des entsprechenden numerischen Datums innerhalb der Klassifizierung,
/e/ Mittel zum Prüfen einer Entsprechung zwischen dem biometrischen Datum (bᵢ₁) des erhaltenen biometrischen Datensatzes (b₁, ..., b_{N}) und des biometrischen Datums (b'), das von dem Sensor (2) erfasst wird.

14. Sicheres Modul (4) für eine Verwendung in einem Identifikations- oder Autorisierungssystem zur Durchführung des Verfahrens nach einem der Ansprüche 1 bis 12, und das mindestens einen Sensor (2) zum Erfassen der biometrischen Daten umfasst, wobei das sichere Modul einen Speicher umfasst, um einen numerischen Datensatz (c₁, ..., c_{N}) zu speichern, die ausgehend von einem jeweiligen biometrischen Datensatz (b₁, ..., b_{N}) mit Hilfe eines Digitalisierungsalgorithmus (φ) erhalten werden, wobei die biometrischen Daten (b₁, ..., b_{N}) jeweilige Individuen betreffen, **dadurch gekennzeichnet, dass** das sichere Modul außerdem eingerichtet ist, um mindestens bestimmte verschlüsselte biometrische Daten, die in einem Speicher (3) außerhalb des sicheren Moduls (4) gespeichert sind, zu entschlüsseln, und das Folgendes umfasst:
- Mittel zum Erhalten eines numerischen Wert (c') durch Anwenden des Digitalisierungsalgorithmus auf ein biometrisches Datum (b'), das von dem Sensor erfasst wird;
- eine Klassifizierungseinheit zum Ausführen eines Proximitätstests mit mindestens bestimmten der numerischen Daten des numerischen Datensatzes, und Erstellen einer Klassifizierung mindestens bestimmter der numerischen Daten in Abhängigkeit von ihrer Proximität mit dem Zahlenwert, der gemäß einem Proximitätskriterium erhalten wird; und
- eine Identifikations- oder Autorisierungseinheit zum Erhalten eines biometrischen Datums (bᵢ₁) des biometrischen Datensatzes unter Berücksichtigung einer Position des entsprechenden digitalen Datums innerhalb der Klassifizierung, und
- Mittel zum Prüfen einer Entsprechung zwischen dem biometrischen Datum (bᵢ₁) des erhaltenen biometrischen Datensatzes (b₁, ..., b_{N}) und dem biometrischen Datum (b'), das von dem Sensor (2) erfasst wird.

## Claims

1. A method of identification or of authorization using a system comprising at least one sensor (2) for acquiring biometric data and one secure module (4) storing a set of digital data (c₁,...,c_{N}) obtained starting from a set of respective biometric data (b₁,...,b_{N}) by means of a digitizing algorithm (Φ), said biometric data (b₁,...,b_{N}) being relative to respective individuals,
in which at least some of the biometric data values from said set of biometric data (b₁,...,b_{N}) are stored in an encoded manner in a memory (3) external to the secure module (4), and in which the secure module is configured for decoding the encoded biometric data,
the method comprising the following steps:
/a/ obtain a biometric data value (b') acquired by the sensor;
/b/ obtain a digital value (c') by application of the digitization algorithm to the biometric data acquired;
**characterized in that** the method comprises the following steps:
/c/ within the secure module, carry out a proximity test of the digital value with at least some digital data of said set of digital data and establish a ranking of some at least of the digital data according to their proximity to the digital value obtained according to a proximity criterion; and
/d/ obtain a biometric data value (bᵢ₁) from said set of biometric data by taking into account a position of the corresponding digital data within the ranking; and
/e/ verify a correspondence between the biometric data (bᵢ₁) obtained from said set of biometric data (b₁,...,b_{N}) and the biometric data (b') acquired by the sensor (2).

2. The method as claimed in claim 1, furthermore comprising the following later step:
/f/ in the case of absence of correspondence, obtain a biometric data value (bᵢ₂) from said set of biometric data corresponding to a digital data value of lower position in the ranking.

3. The method as claimed in claim 2, in which the secure module (4) is divided into at least two sub-sections arranged in order to communicate with one another in a secure manner, one of said sub-sections being responsible for the step /c/ and another of said sub-sections being responsible for the step /e/.

4. The method as claimed in any one of the preceding claims, in which said digitization algorithm is a quantizing algorithm configured to make a biometric data value relating to the same individual as one of the biometric data values of said set of biometric data correspond to a digital value fulfilling said proximity criterion with the digital data value corresponding to said biometric data value from said set of biometric data.

5. The method as claimed in any one of the preceding claims, in which at least some of the biometric data values from said set of biometric data (b₁,...,b_{N}) are stored in an uncoded manner within the secure module (4).

6. The method as claimed in any one of the preceding claims, in which the size of the digital data from said set of digital data (c₁,...,c_{N}) is smaller than the size of the respective biometric data from said set of biometric data (b₁,...,b_{N}).

7. The method as claimed in any one of the preceding claims, in which the secure module (4) stores at least two sets of digital data each obtained starting from a set of respective biometric data by means of a respective digitization algorithm, in which at least two digital values are obtained by application of the respective digitization algorithm to the biometric data (b') acquired, and, within the secure module, at least some of the digital data from each of said sets of digital data are classified according to their proximity to the corresponding digital value according to a proximity criterion, and in which a biometric data value is obtained from said set of biometric data by taking into account a position of the corresponding digital data within the rankings.

8. The method as claimed in any one of the preceding claims, in which the secure module (4) stores at least a first and a second set of digital data each obtained starting from at least a first and a second respective set of respective biometric data by means of a respective digitization algorithm.

9. The method as claimed in claim 8, in which at least one biometric data value acquired by at least one respective sensor is obtained, at least a first and a second digital value are obtained by application to said acquired biometric data of each of the digitization algorithms, within the secure module, a ranking is carried out for at least some of the digital data from the first and second sets of digital data at least according to their proximity to each of the first and second digital values at least, and a biometric data value from one of either the first or second sets of biometric data at least taking into account a position of the corresponding digital data within the ranking.

10. The method as claimed in claim 8, in which at least a first and a second biometric data value acquired by respective sensors are obtained, at least a first and a second digital value are obtained by application of the respective digitization algorithm to at least the first and the second acquired biometric data, respectively, within the secure module, a ranking is carried out on a sub-set of digital data from the second set of digital data, according to their proximity to the second digital value, a biometric data value is obtained from the second set of biometric data taking into account a position of the second digital data value within said ranking, in which said sub-set of digital data from the second set of digital data is selected in order to correspond to a sub-set of biometric data from the second set of biometric data relating to the same individuals as a sub-set of biometric data from the first set of biometric data determined from the first digital value.

11. The method as claimed in any one of the preceding claims, in which the system is a local system comprising a terminal (1) including the sensor and with which the secure module (4) is associated.

12. The method as claimed in any one of claims 1 to 10, in which the system is a distributed system comprising a centralized database (13) storing at least a part of the biometric data (E_{K}(b₁),...,E_{K}(b_{N}); Eₖ(d₁),...,Eₖ(d_{N})) and at least one decentralized terminal (14;15) including a sensor.

13. A system of identification or of authorization for the implementation of the method as claimed in any one of the preceding claims, the system comprising at least one sensor (2) for acquiring biometric data and a secure module (4) storing a set of digital data (c₁,...,c_{N}) obtained from a set of respective biometric data (b₁,...,b_{N}) by means of a digitization algorithm (Φ), said biometric data (b₁,...,b_{N}) being relative to respective individuals,
the secure module being configured for decoding at least some encoded biometric data stored in a memory (3) external to the secure module (4), the system comprising:
/a/ means of obtaining a biometric data value (b') acquired by the sensor;
/b/ a processing unit for determining a digital value (c') by application of the digitization algorithm to the biometric data;
**characterized in that** said system comprises:
/c/ a ranking unit for carrying out, within the secure module, a proximity test of the digital value with at least some digital data of said set of digital data and for establishing a ranking of some at least of the digital data according to their proximity to the digital value obtained according to a proximity criterion; and
/d/ an identification or authorization unit for obtaining a biometric data value (bᵢ₁) from said set of biometric data by taking into account a position of the corresponding digital data within the ranking, and
/e/ means for verifying a correspondence between the biometric data (bᵢ₁) obtained from said set of biometric data (b₁,...,b_{N}) and the biometric data (b') acquired by the sensor (2).

14. A secure module (4) for use in a system of identification or of authorization for the implementation of the method as claimed in any one of claims 1 to 12 and comprising at least one sensor (2) for acquiring biometric data, the secure module comprising a memory for storing a set of digital data (c₁,...,c_{N}) obtained from a set of respective biometric data (b₁,...,b_{N}) by means of a digitization algorithm (Φ), said biometric data (b₁,...,b_{N}) being relative to respective individuals,
**characterized in that** the secure module is further configured for decoding at least some encoded biometric data stored in a memory (3) external to the secure module (4), and comprises:
- means for obtaining a digital value (c') by application of the digitization algorithm to a biometric data acquired (b') by the sensor;
- a ranking unit for carrying out a proximity test of the digital value with at least some digital data of said set of digital data and for establishing a ranking of some at least of the digital data according to their proximity to the digital value obtained according to a proximity criterion; and
- an identification or authorization unit for obtaining a biometric data value (bᵢ₁) from said set of biometric data by taking into account a position of the corresponding digital data within the ranking, and
- means for verifying a correspondence between the biometric data (bᵢ₁) obtained from said set of biometric data (b₁,...,b_{N}) and the biometric data (b') acquired by the sensor (2).
